# EUROPEAN PATENT APPLICATION

(11) **EP 4 513 322 A1**
(43) Date of publication of application: **26.02.2025**
(21) Application number: 23838894.6
(22) Date of filing: 10.07.2023
(51) Int. Cl.: G06F 3/14

(54) **DISPLAY METHOD AND ELECTRONIC DEVICE**

(30) Priority: 15.07.2022 CN 202210836674
(71) Applicant: Huawei Technologies Co., Ltd., Shenzhen, Guangdong 518129 (CN)
(72) Inventor: HAN, Chaoxiang, Shenzhen, Guangdong 518129 (CN); XIA, Yonglin, Shenzhen, Guangdong 518129 (CN); ZHOU, Yu, Shenzhen, Guangdong 518129 (CN); TAO, Yu, Shenzhen, Guangdong 518129 (CN)
(74) Representative: Körber, Martin Hans
(86) International application number: PCT/CN2023/106545
(87) International publication number: WO 2024/012402

(57) **Abstract**

This application provides a display method, a display apparatus, and an electronic device. The method may be applied to a first electronic device. The method includes: The first electronic device receives a control instruction of a second electronic device, where the control instruction includes position information of a cursor; the first electronic device determines, based on the position information, whether a first position of the cursor is in a target display area, where the target display area is an area in which the second electronic device actually displays content; the first electronic device corrects, when determining that the first position is not in the target display area, the first position to obtain a second position, where the second position is in the target display area; and the first electronic device displays the cursor at the second position. In this technical solution, the cursor may be limited to an area in which a display interface is located, so that operation efficiency of a user can be improved, and user experience can be improved.

## Description

This application claims priority to Chinese Patent Application No. 202210836674.X, filed with the China National Intellectual Property Administration on July 15, 2022 and entitled "DISPLAY METHOD AND ELECTRONIC DEVICE", which is incorporated herein by reference in its entirety.

### TECHNICAL FIELD

Embodiments of this application relate to the field of electronic technologies, and more specifically, to a display method and an electronic device.

### BACKGROUND

When a large-screen device like a smart television or a display runs an application that adapts to a mobile phone or an application that adapts to a tablet, or when a large-screen device is used as a projection receiving device to display an application that is run on a mobile phone or an application that is run on a tablet, a display interface of the application is located in a part of an area of a display of the large-screen device. When a user controls the large-screen device by using an input device like a mobile phone, a cursor moves on the entire display of the large-screen device, resulting in low operation efficiency of the user and affecting user experience.

### SUMMARY

This application provides a display method and an electronic device. In this technical solution, a cursor is limited to an area in which a display interface is located, so that operation efficiency of a user can be improved, and user experience can be improved.

According to a first aspect, a display method is provided. The method is applied to a first electronic device, and the method includes: The first electronic device receives a control instruction of a second electronic device, where the control instruction includes position information of a cursor; the first electronic device determines, based on the position information, whether a first position of the cursor is in a target display area, where the target display area is an area in which the first electronic device actually displays content; the first electronic device corrects, when determining that the first position is not in the target display area, the first position to obtain a second position, where the second position is in the target display area; and the first electronic device displays the cursor at the second position.

It should be understood that the first electronic device may be a large-screen device like a smart television, a display, a projector, or a notebook computer, and the second electronic device may be an input device like a mobile phone, a mouse, an air mouse, or a touchpad.

In this embodiment of this application, the first electronic device may obtain the position information of the cursor from the received control instruction, and determine, based on the position information, whether the cursor is located in the target display area in which the first electronic device actually displays content. When the first position of the cursor is not located in the target display area, the first position of the cursor is corrected, so that the second position after correction is located in the target display area. According to the technical solution, when a user controls the first electronic device by using the second electronic device, the cursor may be always located in the area of the actual display content, so that operation efficiency of the user can be improved, and user experience can be improved.

With reference to the first aspect, in an implementation of the first aspect, the method further includes: The first electronic device displays the cursor at the first position when determining that the first position is in the target display area.

In this technical solution, when the first position is in the target display area of the actual display content, the cursor may be directly displayed at the first position. Therefore, operation efficiency of the user can be improved.

With reference to the first aspect, in an implementation of the first aspect, before the first electronic device determines, based on the position information, whether the first position of the cursor is in the target display area, the method further includes: The first electronic device obtains the target display area.

The first electronic device needs to first determine specific areas in a display that belong to the target display area, to facilitate subsequent determining of a position of the cursor

With reference to the first aspect, in an implementation of the first aspect, that the first electronic device obtains the target display area includes: The first electronic device obtains the target display area through a system interface.

The first electronic device may directly obtain the target display area through the system interface, so that the solution is simple and easy to implement.

With reference to the first aspect, in an implementation of the first aspect, that the first electronic device obtains the target display area includes: The first electronic device performs screen capture on a display of the first electronic device, to obtain a first picture of the display; and the first electronic device determines the target display area from the first picture.

In some screen projection scenarios, the first electronic device may not be able to directly obtain the target display area through the system interface. In this case, the first electronic device may obtain a picture of the display, and determine the target display area based on the picture.

The first electronic device needs to first determine specific areas in the display that belong to the target display area, to facilitate subsequent determining of a position of the cursor

With reference to the first aspect, in an implementation of the first aspect, that the first electronic device determines the target display area from the first picture includes: The first electronic device extracts n pixels from each row of pixels in the first picture, and extracts m pixels from each column of pixels in the first picture; the first electronic device adds brightness values of the n pixels to obtain a first brightness value s1, and adds brightness values of the m pixels to obtain a second brightness value s2; and when determining that a first brightness value slq in a qth row is greater than (n*b)+δ, the first electronic device determines that some pixels in the qth row belong to the target display area, and when determining that a second brightness value s2p in a pth column is greater than (m*b)+δ, the first electronic device determines that some pixels in the pth column belong to the target display area, where b indicates a brightness value of a black pixel, δ is a preset error value, and both q and p are integers.

Each row and each column of pixels included in the first picture may be determined, and each boundary of the target display area may be determined based on a determining result, so that the target display area may be determined.

With reference to the first aspect, in an implementation of the first aspect, that the first electronic device determines, based on the position information, whether the first position of the cursor is in the target display area includes: The first electronic device determines, based on coordinates of the first position and vertex coordinates of the target display area, whether the first position is in the target display area.

Whether the position of the cursor is in the target display area may be determined based on the coordinates of the position of the cursor and the vertex coordinates of the target display area, so that the first electronic device further determines whether to correct the position of the cursor

With reference to the first aspect, in an implementation of the first aspect, that the first electronic device corrects, when determining that the first position is not in the target display area, the first position to obtain a second position includes:
if a horizontal coordinate of the first position is less than a horizontal coordinate of a straight line on which a first boundary of the target display area is located, correcting the horizontal coordinate of the first position to the horizontal coordinate of the straight line on which the first boundary is located to be a horizontal coordinate of the second position
if a horizontal coordinate of the first position is greater than a horizontal coordinate of a straight line on which a second boundary that is of the target display area and that is parallel to the first boundary is located, correcting the horizontal coordinate of the first position to the horizontal coordinate of the straight line on which the second boundary is located to be a horizontal coordinate of the second position;
if a vertical coordinate of the first position is less than a vertical coordinate of a straight line on which a third boundary of the target display area is located, correcting the vertical coordinate of the first position to the vertical coordinate of the straight line on which the third boundary is located to be a vertical coordinate of the second position; or
if a vertical coordinate of the first position is greater than a vertical coordinate of a straight line on which a fourth boundary that is of the target display area and that is parallel to the third boundary is located, correcting the vertical coordinate of the first position to the vertical coordinate of the straight line on which the fourth boundary is located to be a vertical coordinate of the second position.

A position of the cursor outside the target display area may be corrected to be located in the target display area, so that the cursor can move in the target display area. This improves operation efficiency of the user.

With reference to the first aspect, in an implementation of the first aspect, before the first electronic device receives the control instruction of the second electronic device, the method further includes: The first electronic device establishes a connection relationship with the second electronic device.

In some embodiments, the control instruction is entered by the user in an application in the second electronic device.

According to a second aspect, a display apparatus is provided, including: a receiving module, configured to receive a control instruction, where the control instruction includes position information of a cursor; a processing module, configured to determine, based on the position information, whether a first position of the cursor is in a target display area, where the target display area is an area in which the display apparatus actually displays content, and the processing module is further configured to: correct the first position to obtain a second position when determining that the first position is not in the target display area, where the second position is in the target display area; and a display module, configured to display the cursor at the second position.

With reference to the second aspect, in an implementation of the second aspect, when the processing module determines that the first position is in the target display area, the display module is further configured to display the cursor at the first position.

With reference to the second aspect, in an implementation of the second aspect, before the processing module determines, based on the position information, whether the first position of the cursor is in the target display area, the processing module is further configured to obtain the target display area.

With reference to the second aspect, in an implementation of the second aspect, the processing module is specifically configured to obtain the target display area through a system interface.

With reference to the second aspect, in an implementation of the second aspect, the processing module is specifically configured to: perform screen capture on a display of the display apparatus, to obtain a first picture of the display; and determine the target display area from the first picture.

With reference to the second aspect, in an implementation of the second aspect, the processing module is specifically configured to: extract n pixels from each row of pixels in the first picture, and extract m pixels from each column of pixels in the first picture; add brightness values of the n pixels to obtain a first brightness value s1, and add brightness values of the m pixels to obtain a second brightness value s2; and when determining that a first brightness value s1q in a qth row is greater than (n*b)+δ, determine that some pixels in the qth row belong to the target display area, and when determining that a second brightness value s2p in a pth column is greater than (m*b)+δ, determine that some pixels in the pth column belong to the target display area, where b indicates a brightness value of a black pixel, δ is a preset error value, and both q and p are integers.

With reference to the second aspect, in an implementation of the second aspect, the processing unit is specifically configured to determine, based on coordinates of the first position and vertex coordinates of the target display area, whether the first position is in the target display area.

With reference to the second aspect, in an implementation of the second aspect, the processing unit is specifically configured to:
if a horizontal coordinate of the first position is less than a horizontal coordinate of a straight line on which a first boundary of the target display area is located, correct the horizontal coordinate of the first position to the horizontal coordinate of the straight line on which the first boundary is located to be a horizontal coordinate of the second position
if a horizontal coordinate of the first position is greater than a horizontal coordinate of a straight line on which a second boundary that is of the target display area and that is parallel to the first boundary is located, correct the horizontal coordinate of the first position to the horizontal coordinate of the straight line on which the second boundary is located to be a horizontal coordinate of the second position;
if a vertical coordinate of the first position is less than a vertical coordinate of a straight line on which a third boundary of the target display area is located, correct the vertical coordinate of the first position to the vertical coordinate of the straight line on which the third boundary is located to be a vertical coordinate of the second position; or
if a vertical coordinate of the first position is greater than a vertical coordinate of a straight line on which a fourth boundary that is of the target display area and that is parallel to the third boundary is located, correct the vertical coordinate of the first position to the vertical coordinate of the straight line on which the fourth boundary is located to be a vertical coordinate of the second position.

With reference to the second aspect, in an implementation of the second aspect, before the receiving module receives the control instruction, the processing module is further configured to establish a connection relationship with a second electronic device.

According to a third aspect, an electronic device is provided, including one or more processors and one or more memories. The one or more memories store one or more computer programs, the one or more computer programs include instructions, and when the instructions are executed by the one or more processors, the display method according to the first aspect and any possible implementation of the first aspect is performed.

According to a fourth aspect, a chip is provided. The chip includes a processor and a communication interface, the communication interface is configured to receive a signal and transmit the signal to the processor, and the processor processes the signal, so that the display method according to the first aspect and any possible implementation of the first aspect is performed.

According to a fifth aspect, a computer-readable storage medium is provided. The computer-readable storage medium stores computer instructions, and when the computer instructions are run on an electronic device, the display method according to the first aspect and any possible implementation of the first aspect is performed.

According to a sixth aspect, a computer program product is provided. The computer program product includes computer program code, and when the computer program code is run on a computer, the display method according to the first aspect and any possible implementation of the first aspect is performed.

### BRIEF DESCRIPTION OF DRAWINGS

FIG. 1 is a diagram of a scenario in which an electronic device displays a portrait application according to an embodiment of this application;
FIG. 2A and FIG. 2B are a diagram of screen projection according to an embodiment of this application;
FIG. 3 is a system framework diagram of a display method according to an embodiment of this application;
FIG. 4 is a system framework diagram of a display method according to an embodiment of this application;
FIG. 5 is a diagram of determining a display area according to an embodiment of this application;
FIG. 6 is another diagram of determining a display area according to an embodiment of this application;
FIG. 7 is a schematic flowchart of a display method according to an embodiment of this application;
FIG. 8 is a block diagram of a display apparatus according to an embodiment of this application; and
FIG. 9 is a block diagram of an electronic device according to an embodiment of this application.

### DESCRIPTION OF EMBODIMENTS

The following describes technical solutions of embodiments in this application with reference to accompanying drawings.

The display method in embodiments of this application may be applied to a large-screen display device like a smart television, a smart screen, a display, or a projector, or may be applied to an electronic device like a tablet computer, a notebook computer, a personal computer, an ultra-mobile personal computer (ultra-mobile personal computer, UMPC), a netbook, or a personal digital assistant (personal digital assistant, PDA) vehicle-mounted device. A specific type of the electronic device is not limited in embodiments of this application.

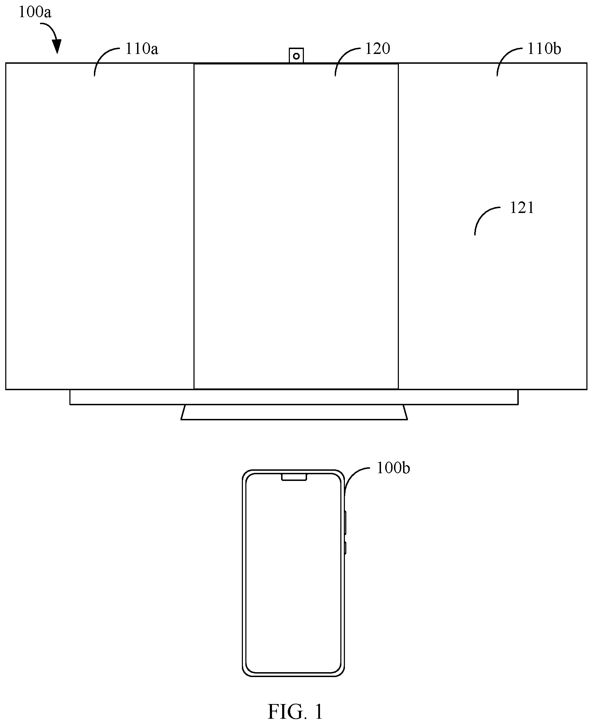

FIG. 1 is a diagram of a scenario in which an electronic device displays a portrait application according to an embodiment of this application. As shown in FIG. 1, an electronic device 100a may be a large-screen device like a smart television, a display, or a notebook computer. An electronic device 100b may be a device that can complete an input operation, for example, a smartphone, a mouse, a touchpad, or an air mouse.

In this embodiment of this application, an example in which the electronic device 100b is a mobile phone and the electronic device 100a is a smart television is used for description.

As a capability of a smart television is enhanced, an application that adapts to a mobile phone or an application that adapts to a tablet may also be installed on the smart television. When the smart television runs these applications, a display interface of the application may be displayed in a middle area of the smart television in a portrait mode. As shown in FIG. 1, when the smart television runs the application that adapts to a mobile phone or the application that adapts to a tablet, a display interface 120 of the application is located in a middle area of a display of the smart television, and no picture is displayed in other areas of the display of the smart television, for example, a display area 110a and a display area 110b. When a connection relationship is established between the mobile phone and the smart television, a user may use the mobile phone 100b to control a cursor 121 to operate the smart television. In this case, in response to an operation performed by the user on the mobile phone, the cursor 121 moves in the entire display of the smart television, resulting in low operation efficiency of the user and affecting user experience.

It should be understood that a manner of establishing the connection relationship between the mobile phone and the smart television is not limited in this embodiment of this application. For example, the mobile phone may establish a connection to the smart television through a docking station, or the mobile phone may further establish a connection to the smart television in a connection manner like a wireless local area network (wireless local area network, WLAN), Bluetooth, ultra-wideband (ultra-wideband, UWB), or wired connection manner.

In some other embodiments, in a screen projection scenario, screen content of the mobile phone may be displayed on a screen of the smart television, or the case shown in FIG. 1 may occur. In this case, the display interface 120 of the mobile phone may be located in the middle area of the smart television. When the user uses the mobile phone to control the cursor 121 to perform control, the cursor 121 may also move in the entire display of the smart television, resulting in low operation efficiency of the user and affecting user experience.

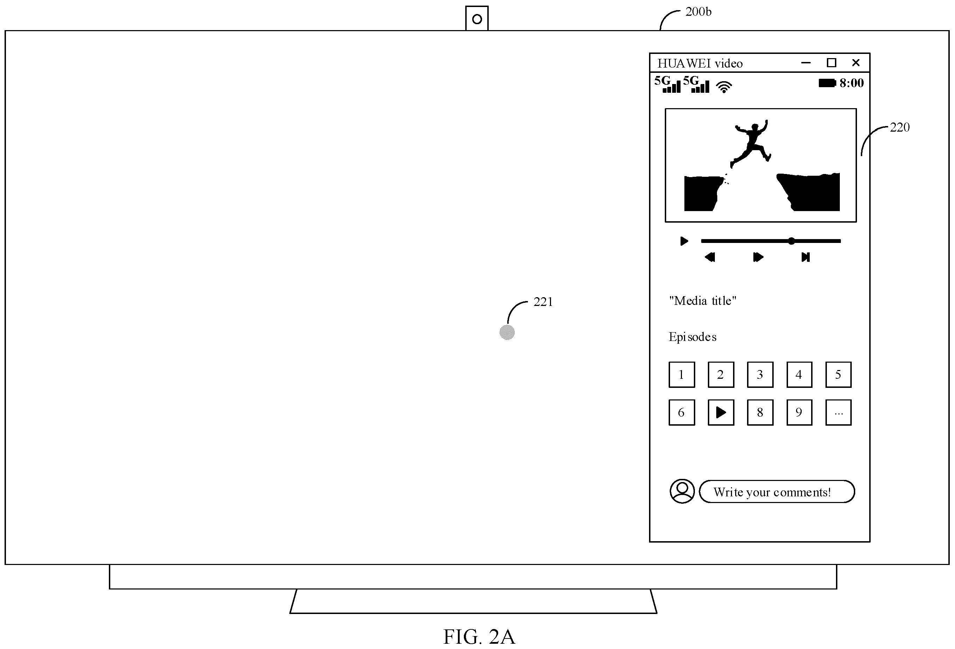

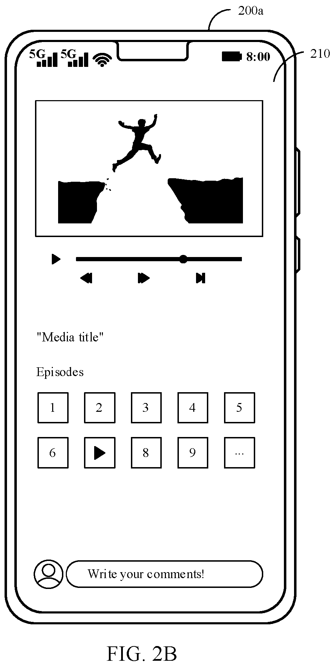

FIG. 2A and FIG. 2B are a diagram of screen projection according to an embodiment of this application. As shown in FIG. 2A and FIG. 2B, screen content of a mobile phone 200a may be displayed on a display of a smart television 200b. In this case, a display interface 220 may be located at any position on a screen of the smart television. When a user uses the mobile phone to control a cursor 221 to control the display interface 220, the cursor 221 may also move in the entire display of the smart television, resulting in low operation efficiency of the user and affecting user experience.

It should be understood that, for a manner of establishing a connection between the mobile phone 200a and the smart television 200b, refer to the foregoing related descriptions. For brevity, details are not described again.

With reference to FIG. 1, FIG. 2A, and FIG. 2B, when a large-screen device like a smart television or a display runs an application that adapts to a mobile phone or an application that adapts to a tablet, or when a large-screen device is used as a projection receiving device to display an application that is run on a mobile phone or a tablet, a display interface of the application is located in a part of an area of a display of the display device. When the user uses an input device like a mobile phone to control the display device, the cursor moves in the entire display of the display device, resulting in low operation efficiency of the user and affecting user experience.

In view of this, embodiments of this application provide a display method, a display apparatus, and an electronic device. In the technical solution, a cursor is limited to an area in which a display interface is located, so that operation efficiency of a user can be improved, and user experience can be improved.

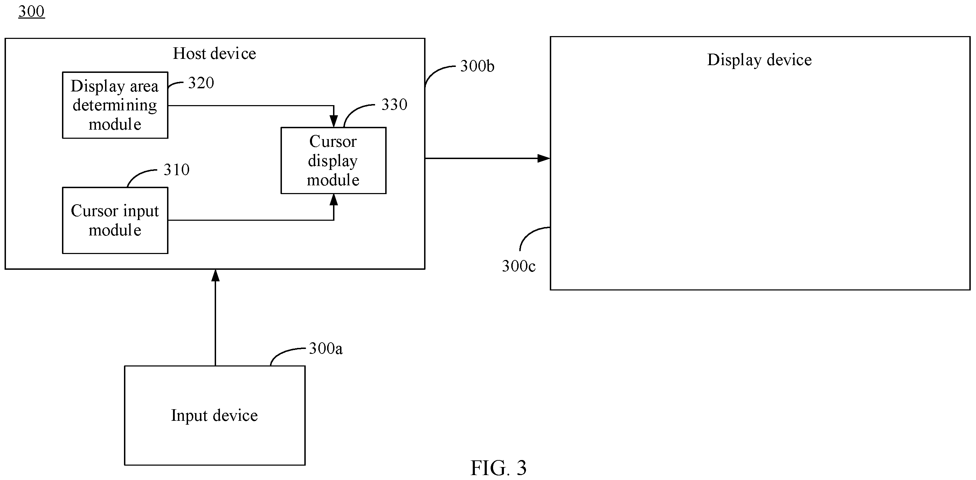

The following describes the display method and the electronic device in embodiments of this application with reference to FIG. 3 to FIG. 9.

FIG. 3 is a system framework diagram of a display method according to an embodiment of this application. As shown in FIG. 3, a system 300 may include an input device 300a, a host device 300b, and a display device 300c. The host device 300b may be a control device of the display device 300c, and the display device 300c may be used as a display of the host device 300b. For example, the host device 300b is a host of a personal computer, and the display device 300c is a display of the personal computer.

In some embodiments, the input device 300a may be configured to input position information of a cursor. For example, the input device 300a may send the position information of the cursor to the host device 300b based on a movement operation of a user, the host device 300b sends the position information of the cursor to the display device 300c, and the display device 300c displays the cursor; or the input device 300a sends related data of the cursor to the host device 300b based on an operation like clicking or dragging of the user, and the host device 300b sends the related data to the display device 300c.

It should be understood that the input device may be a mobile phone, a mouse, a touchpad, an air mouse, or the like. For example, when the input device is the mobile phone, control software in the mobile phone may provide a corresponding function. When the mobile phone starts the control software, a display interface of the mobile phone includes a cursor control area, and the user controls the cursor within the cursor control area.

In some embodiments, the host device 300b may include a cursor input module 310, a display area determining module 320, a cursor display module 330, and the like.

The cursor input module 310 may be configured to read data corresponding to an operation performed by the user on the input device, for example, position data corresponding to a movement operation.

The display area determining module 320 may be configured to determine a display area in which the display device 300c actually displays content.

The cursor display module 330 may be configured to limit the cursor within the display area based on the display area of the actual display content, so that a mouse can move and perform other related operations only within the display area of the actual display content.

It should be understood that the cursor input module 310 and the display area determining module 320 may be integrated into one module, for example, a processor, a processing unit, or a microcontroller unit (microcontroller unit, MCU). Alternatively, the cursor input module 310, the display area determining module 320, and the cursor display module 330 may be integrated into one module. This is not limited in this embodiment of this application.

The display device 300c is configured to display a display interface of an application that adapts to a mobile phone (or an application that adapts to a tablet) or a display interface projected by a mobile phone. The display device is further configured to display a cursor.

In some other embodiments, one or more of the cursor input module 310, the display area determining module 320, and the cursor display module 330 may alternatively be located in the display device 300c. This is not limited in this embodiment of this application.

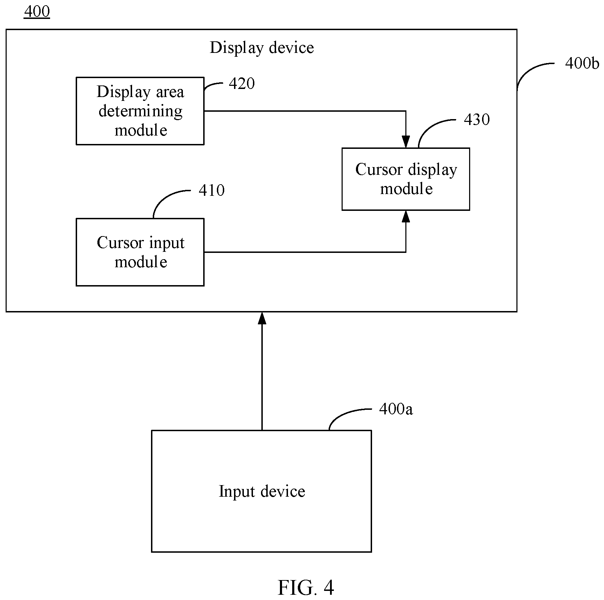

FIG. 4 is a system framework diagram of a display method according to an embodiment of this application. As shown in FIG. 4, a system 400 may include an input device 400a and a display device 400b.

In some embodiments, the display device 400b may include a cursor input module 410, a display area determining module 420, and a cursor display module 430.

It should be understood that, for related functions of the cursor input module 410, the display area determining module 420, and the cursor display module 430, refer to the foregoing descriptions. For brevity, details are not described again.

It should be understood that, for a related function of the input device 400a, refer to the foregoing description. For brevity, details are not described again.

In this embodiment of this application, an example in which the application that adapts to a mobile phone or the application that adapts to a tablet is run on the smart television, and the user uses the mobile phone to control the cursor is used for description.

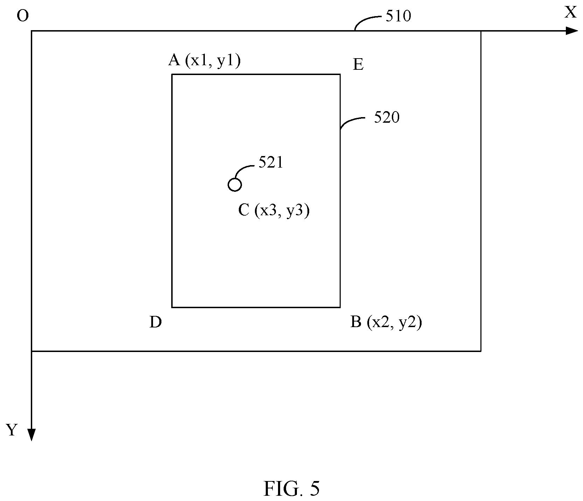

FIG. 5 is a diagram of determining a display area according to an embodiment of this application. As shown in FIG. 5, an area that is on a display of a smart television and that can be used for display is a display area 510. A display interface of an application that adapts to a mobile phone (or an application that adapts to a tablet) and that is run on the smart television is a display interface 520.

To improve efficiency of controlling a mouse by a user, a cursor 521 may be limited to the display interface 520, to prevent the cursor 521 from moving to a position outside the display interface 520 on the screen of the smart television. Therefore, a display area in which the display interface 520 is located needs to be determined.

In some embodiments, as shown in FIG. 5, a plane rectangular coordinate system may be established by using a vertex O of the display area of the smart television as a coordinate origin, using a direction of a first side length (for example, an upper boundary) of the display area as an X-axis direction, and using a direction of a second side length (for example, a left boundary) as a Y-axis direction.

When the application that adapts to a mobile phone (or the application the adapts to a tablet) is installed on the smart television, if the application is run subsequently, a target display area in which the actual display interface 520 of the application is located may be directly obtained through a system interface, for example, may be a rectangle formed by horizontal coordinates x1 to x2 and vertical coordinates y1 to y2. When the user controls the cursor by using the mobile phone, the smart television may limit an obtained position of the cursor within the target display area.

For example, as shown in FIG. 5, if two diagonal vertices of the target display area are respectively A and B, corresponding coordinates are respectively (x1, y1) and (x2, y2), and the remaining two vertices are respectively D and E. A length of the first side length of the display area of the smart television is W, and a length of the second side length is H. Relationships x1 <x2≤W and y1 <y2≤H exist. It is assumed that an obtained real-time position of the cursor is a point C, and corresponding coordinates are (x3, y3).

When determining that the point C is located within the target display area, the smart television may directly display the cursor at the point C. That is, when determining that x1≤x3≤x2 and y1≤y3≤y2, the smart television may determine that C (x3, y3) is located within the target display area, and may directly display the cursor at the point C (x3, y3).

When determining that the point C is located outside the target display area, the smart television may correct the coordinates of the point C, so that coordinates of a point C1 obtained after correction are located within the target display area, and the cursor is displayed at the point C1 in the target display area. A correction rule of the smart television for the position of the cursor is as follows:
(1) if it is determined that x3<x1 and y1≤y3≤y2, x3 is corrected to x1, to obtain a position C1 of the cursor (x1, y3) after correction;
(2) if it is determined that x3<x1 and y3<y1, x3 is corrected to x1, and y3 is corrected to y1, to obtain a position C1 of the cursor (x1, y1) after correction;
(3) if it is determined that x3<x1 and y3>y2, x3 is corrected to x1, and y3 is corrected to y2, to obtain a position C1 of the cursor (x1, y2) after correction;
(4) if it is determined that x1≤x3≤x2 and y3<y1, y3 is corrected to y1, to obtain a position C1 of the cursor (x3, y1) after correction;
(5) if it is determined that x1≤x3≤x2 and y3>y2, y3 is corrected to y2, to obtain a position C1 of the cursor (x3, y2) after correction;
(6) if it is determined that x3>x2 and y3<y1, x3 is corrected to x2, and y3 is corrected to y1, to obtain a position C1 of the cursor (x2, y1) after correction;
(7) if it is determined that x3>x2 and y1≤y3≤y2, x3 is corrected to x2, to obtain a position C1 of the cursor (x2, y3) after correction; or
(8) if it is determined that x3>x2 and y3>y2, x3 is corrected to x2, and y3 is corrected to y2, to obtain a position C1 of the cursor (x2, y2) after correction.

It should be understood that, when the user initially uses the mobile phone to control the cursor, an initial position of the cursor may be located at a central position or a preset position of the display area in which the display interface 520 is located. This is not limited in this embodiment of this application.

It should be understood that the display area may be located at a middle position of the display of the smart television, or may be located at another position. This is not limited in this embodiment of this application.

In some embodiments, the display area in which the display interface 520 is located may alternatively be in another shape, for example, a circle, an ellipse, or a polygon. This is not limited in this embodiment of this application.

In an embodiment of this application, when the application that adapts to a mobile phone or the application that adapts to a tablet is run on the smart television, and a display interface of the application does not cover the display of the smart television, when user uses the mobile phone to control the cursor of the smart television, in this technical solution, the cursor may be automatically limited to the display area in which the display interface of the application is located, so that the cursor can be prevented from moving to another position on the display of the smart television. This improves efficiency of controlling the cursor by the user, and further improves user experience.

In some cases, when the user uses the mobile phone to perform screen projection on the smart television, the smart television may display a display interface of an application of the mobile phone. However, when the smart television obtains the target display area through the system interface, only an area of the entire display can be obtained, and a specific position of the target display area cannot be obtained.

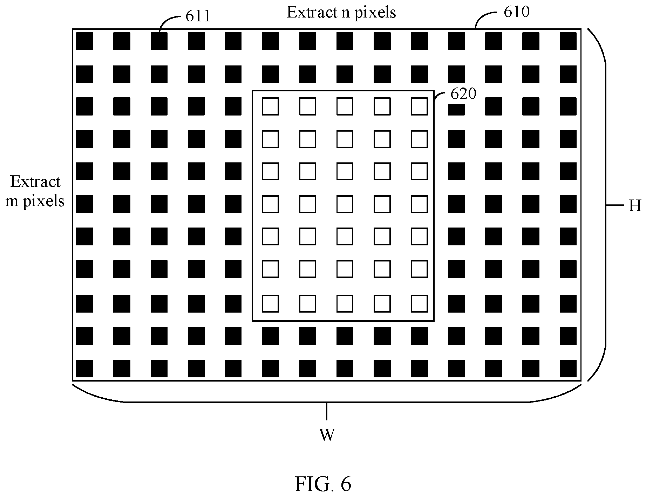

FIG. 6 is another diagram of determining a display area according to an embodiment of this application. As shown in FIG. 6, a picture displayed on a display of a smart television is a display picture 610. A display interface of an application that is run on a mobile phone or an application that is run on a tablet is projected and displayed on a display interface 620 of the smart television.

As shown in FIG. 6, the display of the smart television includes a plurality of pixels 611. When content is displayed on the display, a picture is presented to a user by using the plurality of pixels 611. It is assumed that a length of a first side length of the display of the smart television is W, and a length of a second side length is H.

When determining a target display area, the smart television may perform screen capture on the display, to obtain an entire display picture. After obtaining the entire display picture, the smart television may extract n pixels from each row in a first direction (horizontal direction) to scan brightness values and superimpose the brightness values to obtain s1, and extract m pixels from each column in a second direction (vertical direction) to scan brightness values and superimpose the brightness values to obtain s2. It is assumed that a brightness value of a single black pixel is b, and an allowable error is δ.

The smart television may determine, based on a relationship between s1 and (n*b)+δ, whether a row of pixels is black. When s1≤(n*b)+δ, it may be determined that the row of pixels is black, that is, the pixels do not belong to the target display area. When s1>(n*b)+δ, it may be determined that the row of pixels is not black, that is, the pixels belong to the target display area. To be specific, the row of pixels starts to present a picture. Each row of pixels is determined in this manner, so that an upper boundary and a lower boundary of the target display area can be determined.

The smart television may determine, based on a relationship between s2 and (m*b)+δ, whether a column of pixels is black. When s2<(m*b)+δ, it may be determined that the column of pixels is black, that is, the pixels do not belong to the target display area. When s2>(m*b)+δ, it may be determined that the column of pixels is not black, that is, the pixels belong to the target display area. To be specific, the column of pixels starts to present a picture. Each column of pixels is determined in this manner, so that a left boundary and a right boundary of the target display area can be determined.

The upper boundary, the lower boundary, the left boundary, and the right boundary of the target display area may be separately determined in the foregoing calculation manner, so that the entire target display area may be determined.

It should be understood that a manner of obtaining m and n is not limited in this embodiment of this application. For example, m and n may be extracted at a same interval or different intervals, or m and n may be randomly extracted. Specific values of m and n are not limited in this embodiment of this application. For example, m is 108 and n is 192, or m is 54 and n is 96. Alternatively, m and n may be the same, or may be different.

For example, W includes 1920 pixels, and H includes 1080 pixels. In this case, n may be 192, and m may be 108.

In another embodiment, the smart television may further obtain a frame of a picture of a video stream projected by the mobile phone, to obtain an entire display picture.

It should be understood that the smart television may obtain the target display area based on the foregoing process. When the user uses the mobile phone to control the cursor, the smart television may also limit the obtained position of the cursor to the target display area. For details, refer to the foregoing descriptions. For brevity, details are not described again.

In an embodiment of this application, the smart television may perform screen capture on the display, or obtain a picture of a frame of a projected video stream, and calculate the target display area based on the picture. In this technical solution, the target display area can be determined, which facilitates subsequent execution of a correction process for the position of the cursor. This improves efficiency of controlling the cursor by the user.

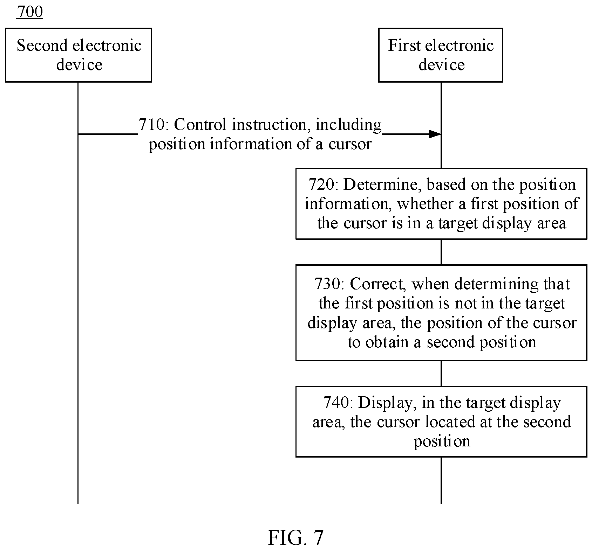

FIG. 7 is a schematic flowchart of a display method according to an embodiment of this application. As shown in FIG. 7, a method 700 may be applied to a first electronic device, and the method 700 may include steps 710 to 740.

710: The first electronic device receives a control instruction of a second electronic device, where the control instruction includes position information of a cursor.

It should be understood that the first electronic device may be a large-screen device like a smart television, a display, a projector, or a notebook computer, and the second electronic device may be an input device like a mobile phone, a mouse, an air mouse, or a touchpad.

The control instruction may be an instruction generated by a user by performing an operation on the second electronic device, for example, may include the position information of the cursor, and may further include data about clicking, dragging, and the like of the cursor.

The position information may be position coordinates of the cursor, position indication information, or the like.

In some embodiments, a corresponding control application program is installed in the second electronic device, and the user may enter the control instruction through the control application program. For example, when the second electronic device runs the control application program, the user enters the control instruction in the second electronic device through sliding, clicking, or the like.

720: The first electronic device determines, based on the position information, whether a first position of the cursor is in a target display area, where the target display area is an area in which the first electronic device actually displays content.

As described above, the application that adapts to a mobile phone or the application that adapts to a tablet may be installed and run on the first electronic device. In this case, the display interface of the application does not completely cover a display of the first electronic device. Alternatively, the first electronic device displays projection content of another electronic device.

It should be understood that, in these scenarios, an area in which the first electronic device actually displays content is a part of an area of the display.

For example, as shown in FIG. 1, the target display area may be a display area in which the display interface 120 is located.

For example, as shown in FIG. 2A and FIG. 2B, the target display area may be a display area in which the display interface 220 is located.

730: The first electronic device corrects, when determining that the first position is not in the target display area, the first position to obtain a second position, where the second position is in the target display area.

It should be understood that the first position may be a position of the cursor that is obtained in real time from the position information sent by the second electronic device. When it is determined that the first position is not in the area of the actual display content, the first position may be corrected, so that the second position after correction is located in the area of the actual display content.

740: The first electronic device displays the cursor at the second position.

The second position is a position of the cursor after the first position is corrected. In this case, the first device may display the cursor at the second position.

For example, as shown in FIG. 5, the first electronic device is a smart television, and the second position may be C (x3, y3). In this case, the smart television may display the cursor 521 at the point C.

In some other embodiments, the first electronic device may further respond, at the second position, to an operation like clicking or dragging of the user.

In this embodiment of this application, the first electronic device may obtain the position information of the cursor from the received control instruction, and determine, based on the position information, whether the cursor is located in the target display area in which the first electronic device actually displays content. When the first position of the cursor is not located in the target display area, the first position of the cursor is corrected, so that the second position after correction is located in the target display area. According to the technical solution, when a user controls the first electronic device by using the second electronic device, the cursor may be always located in the area of actual display content, so that operation efficiency of the user can be improved, and user experience can be improved.

In some embodiments, the method 700 may further include:
The first electronic device displays the cursor at the first position when determining that the first position is in the target display area.

In this technical solution, when the first position is in the target display area of the actual display content, the cursor may be directly displayed at the first position. Therefore, operation efficiency of the user can be improved.

In some embodiments, before the first electronic device determines, based on the position information, whether the first position of the cursor is in the target display area, the method 700 may further include:
The first electronic device obtains the target display area.

In this embodiment of this application, the first electronic device needs to first determine specific areas in a display that belong to the target display area, to facilitate subsequent determining of the position of the cursor.

In some embodiments, that the first electronic device obtains the target display area includes:
The first electronic device obtains the target display area through a system interface.

In some cases, for example, applications of a mobile phone or a tablet are installed on the first electronic device. When running these applications, the first electronic device may directly obtain an area of actual display content through the system interface of the first electronic device.

In this embodiment of this application, the first electronic device may directly obtain the target display area through the system interface, so that the solution is simple and easy to implement.

In some embodiments, that the first electronic device obtains the target display area includes:
The first electronic device performs screen capture on a display of the first electronic device, to obtain a first picture of the display; and the first electronic device determines the target display area from the first picture.

In some screen projection scenarios, the first electronic device may not be able to directly obtain the target display area through the system interface. In this case, the first electronic device may obtain a picture of the display, and determine the target display area based on the picture.

For example, as shown in FIG. 6, the first electronic device performs screen capture on the display to obtain a display picture 610, and determines the target display area based on the display picture 610.

In this embodiment of this application, the first electronic device needs to first determine specific areas in a display that belong to the target display area, to facilitate subsequent determining of the position of the cursor.

In some embodiments, that the first electronic device determines the target display area from the first picture includes: The first electronic device extracts n pixels from each row of pixels in the first picture, and extracts m pixels from each column of pixels in the first picture; the first electronic device adds brightness values of the n pixels to obtain a first brightness value s1, and adds brightness values of the m pixels to obtain a second brightness value s2; and when determining that a first brightness value s1q in a qth row is greater than (n*b)+δ, the first electronic device determines that some pixels in the qth row belong to the target display area, and when determining that a second brightness value s2p in a pth column is greater than (m*b)+δ, the first electronic device determines that some pixels in the pth column belong to the target display area, where b indicates a brightness value of a black pixel, δ is a preset error value, and both q and p are integers.

It should be understood that the first brightness value s1 is a sum of brightness values of n pixels extracted from a row of pixels. The second brightness value s2 is a sum of brightness values of m pixels extracted from a column of pixels.

For example, for a specific description of determining, by the first electronic device through the foregoing calculation method, whether the pixel in the qth row or the pth column belongs to the target display area, refer to related descriptions in FIG. 6. For brevity, details are not described again.

It should be understood that the upper boundary, the lower boundary, the left boundary, and the right boundary of the target display area may be separately determined in the foregoing calculation manner, so that the entire target display area may be determined.

It should be understood that a manner of obtaining m and n is not limited in this embodiment of this application. For example, m and n may be extracted at a same interval or different intervals, or m and n may be randomly extracted. Specific values of m and n are not limited in this embodiment of this application. For example, m is 108, and n is 192, or m is 54, and n is 96. Alternatively, m and n may be the same, or may be different.

In another embodiment, the first electronic device may further obtain a frame of a picture of a projected video stream, to obtain an entire display picture.

In this embodiment of this application, each row and each column of pixels included in the first picture may be determined, and each boundary of the target display area may be determined based on a determining result, so that the target display area may be determined.

In some embodiments, that the first electronic device determines, based on the position information, whether a first position of the cursor is in a target display area includes: The first electronic device determines, based on coordinates of the first position and vertex coordinates of the target display area, whether the first position is in the target display area.

For example, as shown in FIG. 5, the first electronic device may determine, by comparing the real-time position of the cursor with the vertex coordinates of the display interface 520, whether the position of the cursor is in an area in which the display interface 520 is located.

In this embodiment of this application, whether the position of the cursor is in the target display area may be determined based on the coordinates of the position of the cursor and the vertex coordinates of the target display area, so that the first electronic device further determines whether to correct the position of the cursor.

In some embodiments, that the first electronic device corrects, when determining that the first position is not in the target display area, the first position to obtain a second position includes:
if a horizontal coordinate of the first position is less than a horizontal coordinate of a straight line on which a first boundary of the target display area is located, correcting the horizontal coordinate of the first position to the horizontal coordinate of the straight line on which the first boundary is located to be a horizontal coordinate of the second position;
if a horizontal coordinate of the first position is greater than a horizontal coordinate of a straight line on which a second boundary that is of the target display area and that is parallel to the first boundary is located, correcting the horizontal coordinate of the first position to the horizontal coordinate of the straight line on which the second boundary is located to be a horizontal coordinate of the second position;
if a vertical coordinate of the first position is less than a vertical coordinate of a straight line on which a third boundary of the target display area is located, correcting the vertical coordinate of the first position to the vertical coordinate of the straight line on which the third boundary is located to be a vertical coordinate of the second position; or
if a vertical coordinate of the first position is greater than a vertical coordinate of a straight line on which a fourth boundary that is of the target display area and that is parallel to the third boundary is located, correcting the vertical coordinate of the first position to the vertical coordinate of the straight line on which the fourth boundary is located to be a vertical coordinate of the second position.

For example, as shown in FIG. 5, the first boundary may be AD. When the horizontal coordinate of the first position is less than a horizontal coordinate x1 of a straight line on which AD is located, the horizontal coordinate of the first position may be corrected to x1.

The second boundary may be EB. When the horizontal coordinate of the first position is greater than a horizontal coordinate x2 of a straight line on which EB is located, the horizontal coordinate of the first position may be corrected to x2.

The third boundary may be AE. When the vertical coordinate of the first position is less than a vertical coordinate y1 of a straight line on which AE is located, the vertical coordinate of the first position may be corrected to y1.

The fourth boundary may be DB. When the vertical coordinate of the first position is greater than a vertical coordinate y2 of a straight line on which DB is located, the vertical coordinate of the first position may be corrected to y2.

Based on this embodiment of this application, the position of the cursor outside the target display area may be corrected to be located in the target display area, so that the cursor can move in the target display area. This improves operation efficiency of the user.

In some embodiments, before the first electronic device receives the control instruction of the second electronic device, the method 700 may further include: The first electronic device establishes a connection relationship with the second electronic device.

It should be understood that a manner of establishing the connection relationship between the first electronic device and the second electronic device is not limited in this embodiment of this application. For example, a connection manner may be a WLAN, Bluetooth, ultra-wideband (ultra wide band, UWB), or wired connection manner.

In some embodiments, the control instruction is entered by the user in an application in the second electronic device.

In some other embodiments, an embodiment of this application further provides a display method. The display method is applied to a display system, the display system includes a first electronic device, a second electronic device, and a third electronic device. The method includes:
The first electronic device receives a control instruction of the second electronic device, where the control instruction includes position information of a cursor;
the first electronic device determines, based on the position information, whether a first position of the cursor is in a target display area, where the target display area is an area in which the third electronic device actually displays content;
the first electronic device corrects, when determining that the first position is not in the target display area, the first position to obtain a second position, where the second position is in the target display area;
the first electronic device sends the second position of the cursor to the third electronic device; and
the third electronic device displays the cursor at the second position.

In this embodiment of this application, the third electronic device may be used as a display device of the first electronic device.

It should be understood that in this embodiment, for specific descriptions of obtaining the target display area, determining whether the first position is in the target display area, and correcting the first position by the first electronic device, refer to the foregoing related descriptions. For brevity, details are not described again.

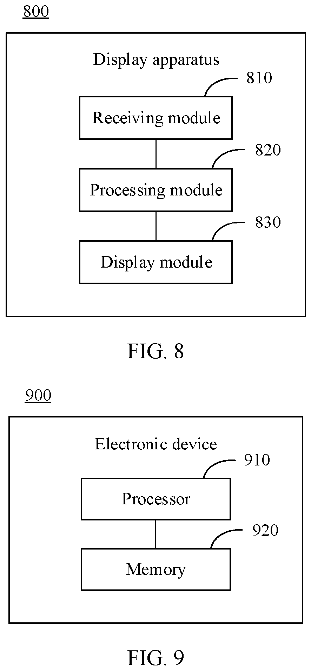

FIG. 8 is a block diagram of a display apparatus according to an embodiment of this application. As shown in FIG. 8, a display apparatus 800 may include a receiving module 810, a processing module 820, and a display module 830.

The receiving module 810 may be configured to receive a control instruction, where the control instruction includes position information of a cursor.

The processing module 820 may be configured to determine, based on the position information, whether a first position of the cursor is in a target display area, where the target display area is an area in which the display apparatus actually displays content.

The processing module 820 is further configured to: correct the first position to obtain a second position when determining that the first position is not in the target display area, where the second position is in the target display area.

The display module 830 may be configured to display the cursor at the second position.

In some embodiments, the display apparatus 800 may be the foregoing display device 400b, for example, may be a large-screen device like a smart television, a notebook computer, or a smart screen.

In some embodiments, when the processing module 820 determines that the first position is in the target display area, the display module 830 is further configured to display the cursor at the first position.

In some embodiments, before the processing module 820 determines, based on the position information, whether the first position of the cursor is in the target display area, the processing module 820 is further configured to obtain the target display area.

In some embodiments, the processing module 820 is specifically configured to obtain the target display area through a system interface.

In some embodiments, the processing module 820 is specifically configured to: perform screen capture on a display of the display apparatus, to obtain a first picture of the display; and determine the target display area from the first picture.

In some embodiments, the processing module 820 is specifically configured to:
extract n pixels from each row of pixels in the first picture, and extract m pixels from each column of pixels in the first picture;
add brightness values of the n pixels to obtain a first brightness value s1, and add brightness values of the m pixels to obtain a second brightness value s2; and when determining that a first brightness value s1q in a qth row is greater than (n*b)+δ, determine that some pixels in the qth row belong to the target display area, and when determining that a second brightness value s2p in a pth column is greater than (m*b)+δ, determine that some pixels in the pth column belong to the target display area, where b indicates a brightness value of a black pixel, δ is a preset error value, and both q and p are integers.

In some embodiments, the processing unit 820 is specifically configured to determine, based on coordinates of the first position and vertex coordinates of the target display area, whether the first position is in the target display area.

In some embodiments, the processing unit 820 is specifically configured to:
if a horizontal coordinate of the first position is less than a horizontal coordinate of a straight line on which a first boundary of the target display area is located, correct the horizontal coordinate of the first position to the horizontal coordinate of the straight line on which the first boundary is located to be a horizontal coordinate of the second position;
if a horizontal coordinate of the first position is greater than a horizontal coordinate of a straight line on which a second boundary that is of the target display area and that is parallel to the first boundary is located, correct the horizontal coordinate of the first position to the horizontal coordinate of the straight line on which the second boundary is located to be a horizontal coordinate of the second position;
if a vertical coordinate of the first position is less than a vertical coordinate of a straight line on which a third boundary of the target display area is located, correct the vertical coordinate of the first position to the vertical coordinate of the straight line on which the third boundary is located to be a vertical coordinate of the second position; or
if a vertical coordinate of the first position is greater than a vertical coordinate of a straight line on which a fourth boundary that is of the target display area and that is parallel to the third boundary is located, correct the vertical coordinate of the first position to the vertical coordinate of the straight line on which the fourth boundary is located to be a vertical coordinate of the second position.

In some embodiments, before the receiving module 810 receives the control instruction, the processing module 820 is further configured to:
establish a connection relationship with a second electronic device.

FIG. 9 is a block diagram of an electronic device according to an embodiment of this application. As shown in FIG. 9, an electronic device 900 may include one or more processors 910 and one or more memories 920. The one or more memories 920 store one or more computer programs, the one or more computer programs include instructions, and when the instructions are executed by the one or more processors, the display method in any one of the foregoing possible implementations is performed.

In some embodiments, the electronic device 900 may be the foregoing display device 400b, for example, may be a large-screen device like a smart television, a notebook computer, or a smart screen.

An embodiment of this application further provides a chip. The chip includes a processor and a communication interface. The communication interface is configured to receive a signal and transmit the signal to the processor. The processor processes the signal, so that the display method according to any one of the foregoing possible implementations is performed.

It may be understood that, to implement the foregoing functions, the electronic device includes corresponding hardware and/or software modules for performing the functions. With reference to algorithm steps of each example described in the embodiments disclosed in this specification, this application may be implemented in a hardware form or in a form of combining hardware with computer software. Whether a function is performed in a manner of hardware or computer software driving hardware depends on a specific application and a design constraint condition of the technical solution. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in this embodiment is an example and is merely logical function division. In actual implementation, there may be another division manner.

This embodiment further provides a computer-readable storage medium. The computer-readable storage medium stores computer instructions. When the computer instructions are run on an electronic device, the electronic device is enabled to perform the foregoing related method steps to implement a display method in the foregoing embodiments.

This embodiment further provides a computer program product. When the computer program product is run on a computer, the computer is enabled to perform the foregoing related steps, to implement the display method in the foregoing embodiments.

In addition, this embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the display method in the foregoing method embodiments.

The electronic device, the computer-readable storage medium, the computer program product, or the chip provided in embodiments is configured to perform the corresponding method provided above. Therefore, for beneficial effect that can be achieved, refer to the beneficial effect in the corresponding methods provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on this understanding, the technical solutions of this application essentially, part contributing to the conventional technology, or some of the technical solutions may be implemented in a form of a software product. A computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display method, wherein the method is applied to a first electronic device, and the method comprises:
receiving, by the first electronic device, a control instruction of a second electronic device, wherein the control instruction comprises position information of a cursor;
determining, by the first electronic device based on the position information, whether a first position of the cursor is in a target display area, wherein the target display area is an area in which the first electronic device actually displays content;
correcting, by the first electronic device when determining that the first position is not in the target display area, the first position to obtain a second position, wherein the second position is in the target display area; and
displaying, by the first electronic device, the cursor at the second position

2. The method according to claim 1, wherein the method further comprises:
displaying, by the first electronic device, the cursor at the first position when determining that the first position is in the target display area.

3. The method according to claim 1 or 2, wherein before the determining, by the first electronic device based on the position information, whether a first position of the cursor is in a target display area, the method further comprises:
obtaining, by the first electronic device, the target display area.

4. The method according to claim 3, wherein the obtaining, by the first electronic device, the target display area comprises:
obtaining, by the first electronic device, the target display area through a system interface.

5. The method according to claim 3, wherein the obtaining, by the first electronic device, the target display area comprises:
performing, by the first electronic device, screen capture on a display of the first electronic device, to obtain a first picture of the display; and
determining, by the first electronic device, the target display area from the first picture.

6. The method according to claim 5, wherein the determining, by the first electronic device, the target display area from the first picture comprises:
extracting, by the first electronic device, n pixels from each row of pixels in the first picture, and extracting m pixels from each column of pixels in the first picture;
adding, by the first electronic device, brightness values of the n pixels to obtain a first brightness value s1, and adding brightness values of the m pixels to obtain a second brightness value s2; and
when determining that a first brightness value s1q in a q^{th} row is greater than (n*b)+δ, determining, by the first electronic device, that some pixels in the q^{th} row belong to the target display area, and when determining that a second brightness value s2p in a p^{th} column is greater than (m*b)+δ, determining, by the first electronic device, that some pixels in the p^{th} column belong to the target display area, wherein b indicates a brightness value of a black pixel, δ is a preset error value, and both q and p are integers.

7. The method according to any one of claims 1 to 6, wherein the determining, by the first electronic device based on the position information, whether a first position of the cursor is in a target display area comprises:
determining, by the first electronic device based on coordinates of the first position and vertex coordinates of the target display area, whether the first position is in the target display area.

8. The method according to any one of claims 1 to 7, wherein the correcting, by the first electronic device when determining that the first position is not in the target display area, the first position to obtain a second position comprises:
if a horizontal coordinate of the first position is less than a horizontal coordinate of a straight line on which a first boundary of the target display area is located, correcting the horizontal coordinate of the first position to the horizontal coordinate of the straight line on which the first boundary is located to be a horizontal coordinate of the second position;
if a horizontal coordinate of the first position is greater than a horizontal coordinate of a straight line on which a second boundary that is of the target display area and that is parallel to the first boundary is located, correcting the horizontal coordinate of the first position to the horizontal coordinate of the straight line on which the second boundary is located to be a horizontal coordinate of the second position;
if a vertical coordinate of the first position is less than a vertical coordinate of a straight line on which a third boundary of the target display area is located, correcting the vertical coordinate of the first position to the vertical coordinate of the straight line on which the third boundary is located to be a vertical coordinate of the second position; or
if a vertical coordinate of the first position is greater than a vertical coordinate of a straight line on which a fourth boundary that is of the target display area and that is parallel to the third boundary is located, correcting the vertical coordinate of the first position to the vertical coordinate of the straight line on which the fourth boundary is located to be a vertical coordinate of the second position.

9. The method according to any one of claims 1 to 8, wherein before the receiving, by the first electronic device, a control instruction of a second electronic device, the method further comprises:
establishing, by the first electronic device, a connection relationship with the second electronic device.

10. An electronic device, comprising one or more processors and one or more memories, wherein the one or more memories store one or more computer programs, the one or more computer programs comprise instructions, and when the instructions are executed by the one or more processors, the display method according to any one of claims 1 to 9 is performed.

11. A chip, wherein the chip comprises a processor and a communication interface, the communication interface is configured to: receive a signal, and transmit the signal to the processor, and the processor processes the signal, for performing the display method according to any one of claims 1 to 9.

12. A computer-readable storage medium, wherein the computer-readable storage medium stores computer instructions, and when the computer instructions are run on a computer, the display method according to any one of claims 1 to 9 is performed.
